# EUROPÄISCHE PATENTSCHRIFT

(11) **EP 2 906 893 B1**
(45) Veröffentlichungstag und Bekanntmachung des Hinweises auf die Patenterteilung: **28.12.2016**
(21) Anmeldenummer: 13745403.9
(22) Anmeldetag: 02.08.2013
(51) Int. Cl.: F28D 21/00, F28D 9/00, F02B 29/04, F02M 26/02, F28F 3/02, F28F 3/04, F28F 9/02, F02M 26/29, F02M 26/32

(54) **WÄRMETAUSCHER**
HEAT EXCHANGER
ÉCHANGEUR THERMIQUE

(30) Priorität: 17.09.2012 DE 102012216589
(43) Veröffentlichungstag der Anmeldung: 19.08.2015
(73) Patentinhaber: Mahle International GmbH, 70376 Stuttgart (DE)
(72) Erfinder: BARWIG, Jürgen, 71665 Vaihingen/Enz (DE); ENSMINGER, Steffen, 73274 Notzingen (DE); MAUCHER, Ulrich, 70825 Korntal-Münchingen (DE); SCHMID, Matthias, 70197 Stuttgart (DE)
(74) Vertreter: Grauel, Andreas
(86) Internationale Anmeldenummer: PCT/EP2013/066289
(87) Internationale Veröffentlichungsnummer: WO 2014/040797

(56) Entgegenhaltungen:
- EP-A1- 1 843 117
- DE-A1-102009 010 039
- DE-A1-102011 077 154
- FR-A1- 2 936 043
- US-A1- 2007 023 174

## Beschreibung

### Technisches Gebiet

Die Erfindung betrifft einen Wärmetauscher, insbesondere einen Ladeluftkühler oder einen Abgaskühler für ein Kraftfahrzeug, nach dem Oberbegriff von Anspruch 1. Solch ein Wärmetauscher ist aus US 2007/0023174 A1 bekannt.

### Stand der Technik

Aus der EP 1 348 924 B1 ist ein Abgaswärmetauscher bekannt, der aus einem von einem Gehäuse umgebenen Stapel besteht, wobei der Stapel aus Flachrohren gebildet ist und jedes Flachrohr einen Turbulator enthält, wobei jedes Flachrohr von Abgas durchströmt wird. Jeweils zwischen zwei Flachrohren ist ein Kühlmittelkanal angeformt, der mit Strömungsleitelementen ausgestaltet ist, durch welchen das, die Wärme des Abgases aufnehmende Kühlmittel geführt ist.

Um steigende Abgastemperaturen besser ausgleichen zu können, ist aus der DE 10 2006 005 362 A1 ein Abgaswärmetauscher bekannt, bei welchem die Strömungsleitelemente aus einer gewellten Platte bestehen. In dieser Platte sind Kanäle mit Ein- und Austritten ausgebildet, die sich in Längs- oder Querrichtung des Abgaswärmetauschers erstrecken. Bei beiden Lösungen sind die Abgaskanäle von einem kühlmittelführenden Gehäuse umschlossen, welches ein erhebliches Gewicht aufweist und einen hohen Kostenbeitrag bei der Herstellung des Abgaswärmetauschers hervorruft.

Die EP 1 762 807 B1 offenbart einen Wärmetauscher mit jeweils einen Fluidkanal bildenden Scheibenpaaren, wobei durch den Fluidkanal Abgas strömt. Zwischen den Scheibenpaaren werden einzelne Kanäle gebildet, die das Kühlmittel führen, wobei die das Abgas führenden Fluidkanäle nach außen den Wärmetauscher begrenzen und so die heißen Fluidkanäle die Außenwand des Wärmetauschers bilden. Zur Durchführung der das Kühlmittel führenden Fluidkanäle seitlich nach außen sind in den das Abgas führenden Wandbereichen des Fluidkanals Prägungen notwendig, die den Strömungsquerschnitt des das Abgas führenden Fluidkanals reduzieren.

### Darstellung der Erfindung, Aufgabe, Lösung, Vorteile

Es ist die Aufgabe der Erfindung, einen Wärmetauscher zu schaffen, welcher trotz minimiertem Materialaufwand und Gewicht thermisch hoch belastbar ist.

Dies wird erreicht mit den Merkmalen von Anspruch 1.

Ein Ausführungsbeispiel der Erfindung betrifft einen Wärmetauscher, insbesondere Abgaskühler oder Ladeluftkühler, umfassend einen, aus mehreren länglichen Scheibenpaaren bestehenden Scheibenstapel, wobei jeweils zwei miteinander verbundene Scheiben einen zweiten Fluidkanal zwischen sich bilden und zwischen zwei Scheibenpaaren ein erster Fluidkanal gebildet ist, wobei ein erster Fluidkanal von zwei zweiten Fluidkanälen umgriffen ist, wobei jeder zweite Fluidkanal an mindestens einen Fluidsammelkanal angeschlossen ist. Dadurch wird erreicht, dass der zweite Fluidkanal den Scheibenstapel nach außen begrenzt und damit der das zweite Medium führende Kanal mit den niedrigeren Temperaturen den Scheibenstapel nach außen begrenzt.

Dabei ist es vorteilhaft, wenn die miteinander verbundenen zwei Scheiben eines Scheibenpaares einen u-förmigen zweiten Fluidkanal oder einen z-förmigen zweiten Fluidkanal zwischen sich bilden. So kann durch Aufeinanderstapelung zweier Scheibenpaare ein von zweiten Fluidkanälen eingeschlossener erster Fluidkanal geschaffen werden.

Dabei ist es zweckmäßig, wenn der u-förmige zweite Fluidkanal von einem weiteren zweiten Fluidkanal derart abgedeckt ist, dass zwischen den beiden zweiten Fluidkanälen ein erster Fluidkanal angeordnet ist.

Auch ist es zweckmäßig, wenn der erste Fluidkanal vierseitig von dem zweiten Fluidkanal eingefasst ist.

Vorteilhaft ist es auch, wenn eine Wand des zweiten Fluidkanals den Wärmeübertrager außen begrenzt.

Erfindungsgemäß sind die zwei miteinander verbundenen Scheiben eines Scheibenpaares beidseitig an ihren Rändern entlang ihrer Längserstreckung und/oder Quererstreckung verlötet oder verschweißt.

Auch ist es zweckmäßig, wenn ein senkrecht an der unteren Scheibe und/oder an der oberen Scheibe ausgeformter Rand mit einem Boden der darüber liegenden unteren Scheibe verlötet ist.

Erfindungsgemäß sind in mindestens einem der ausgeformten Ränder wenigstens eine Öffnung zur Verbindung des zweiten Fluidkanals mit dem Kühlmittelsammelkanal ausgebildet.

Auch ist es zweckmäßig, wenn sich das Sammelrohr den Scheibenstapel annähernd senkrecht überdeckend ausdehnt und vorzugsweise gegenüberliegend zu den Öffnungen des Scheibenstapels eine Ausnehmung zum Austausch des zweiten Fluids, wie eines Kühlmittels, aufweist.

Vorteilhaft ist es, wenn das Sammelrohr als Rohrsegment ausgebildet ist. Dadurch kann eine einfache Fertigung erreicht werden.

Dabei ist es zweckmäßig, wenn das Sammelrohr als Spannklammer den Scheibenstapel wenigstens teilweise umspannt.

Auch ist es zweckmäßig, wenn je eine Öffnung im Rand der Scheibe nahe einem Eintritt und einem Austritt des ersten Fluids ausgebildet ist, wobei der Eintritt und der Austritt des ersten Fluids durch die Schmalseiten der zwei miteinander verbundenen Scheiben gebildet sind und die Öffnungen mehrerer miteinander verbundener Scheibenpaare, welche aufeinanderliegend angeordnet sind, annähernd übereinanderliegen.

Dabei ist es zweckmäßig, wenn zum Verschluss des obersten zweiten Fluidkanals eine randlose oder berandete Abdeckscheibe vorgesehen ist. Dabei kann es weiterhin vorteilhaft sein, wenn zum Verschluss des untersten zweiten Fluidkanals eine randlose oder berandete Grundscheibe verwendet ist.

Besonders vorteilhaft ist es, wenn der Kühlmittelsammelkanal als Sammelrohr ausgebildet ist. Dadurch kann bei einem Ausführungsbeispiel eine zusätzliche Rohrleitung für das Kühlmittel ganz oder zumindest teilweise entfallen.

Auch ist es vorteilhaft, wenn sich das Sammelrohr den Scheibenstapel annähernd senkrecht überdeckend ausdehnt und vorzugsweise gegenüberliegend zu den Öffnungen des Scheibenstapels eine Ausnehmung zum Austausch des zweiten Fluids, wie eines Kühlmittels, aufweist.

Dabei ist es zweckmäßig, wenn das Sammelrohr als Rohrsegment ausgebildet ist.

Auch ist es vorteilhaft, wenn das Sammelrohr als Spannklammer den Scheibenstapel wenigstens teilweise umspannt. Dadurch hat das Sammelrohr einen weiteren Effekt für das Zusammenhalten des Scheibenstapels.

Auch ist es vorteilhaft, wenn der Kühlmittelsammelkanal als Kühlmittelkasten ausgebildet ist.

Auch ist es zweckmäßig, wenn jeder zweite Fluidkanal an den Kühlmittelkasten angeschlossen ist, wobei der Kühlmittelkasten einen äußeren Anschluss für ein Verbindungsmittel, insbesondere ein Rohr, zur Zuleitung des Kühlmittels in den Kühlmittelkasten oder zur Ableitung des Kühlmittels aus dem Kühlmittelkasten aufweist. Dies hat den Vorteil, dass die Verbindungsmittel mitgelötet werden können und der Fertigungsaufwand sich damit reduziert. Die Verwendung eines Rohrs als Verbindungsmittel ist weiterhin kostengünstig und es kann sehr flexibel geformt werden.

Auch ist es zweckmäßig, wenn der Kühlmittelkasten als einteiliger Diffusor ausgebildet ist. Dies hat den Vorteil, dass eine präzise Formgebung ermöglicht wird, weil keine oder nur geringe Verzüge eines zusätzlichen Fügeprozesses auftreten, insbesondere keine Schweißverzüge.

Weiterhin ist es zweckmäßig, wenn der Kühlmittelsammelkanal als Flansch ausgebildet ist, der aus einem den Scheibenstapel zumindest teilweise umgreifenden Blech, oder Gussteil oder Kunststoffteil gebildet ist und eine Dichtfläche zur Verbindung mit dem Verbindungsmittel aufweist. Dies hat den Vorteil, dass der Flansch direkt an eine Öffnung beispielsweise in der Kühlmittelsammelleiste angelegt werden kann, ohne dass eine zusätzliche Verrohrung nötig ist, was eine Kosteneinsparung und eine einfache Montage bedeuten kann.

Dabei ist es vorteilhaft, wenn der Wärmetauscher zumindest teilweise aus einem austenitischen und/oder ferritischen Werkstoff gefertigt ist. Ein austenitischer Werkstoff hat den Vorteil, dass eine hervorragende Korrosionsbeständigkeit und Umformbarkeit gegeben ist und ein ferritischer Werkstoff hat den Vorteil, dass er preisgünstig ist und ein sehr gutes Preis-/Leistungsverhältnis gegeben ist. Er weist eine bessere Wärmeleitung und dadurch eine erhöhte Kühlleistung auf, eine geringere thermische Ausdehnung und dadurch geringere thermische Spannungen.

Auch ist es zweckmäßig, wenn alle Bauteile des Wärmetauschers in einem einzigen Ofendurchlauf lötbar sind. Dies bewirkt eine hohe Maßhaltigkeit durch geringe Verzüge, was eine kostengünstige Fertigung begründet.

Ein vorteilhafter Wärmetauscher kann optional und/oder zusätzlich zu anderen Merkmalen derart ausgebildet sein, dass der u-förmige zweite Fluidkanal von einem weiteren zweiten Fluidkanal derart abgedeckt ist, dass zwischen den beiden zweiten Fluidkanälen ein erster Fluidkanal angeordnet ist.

Ein vorteilhafter Wärmetauscher kann optional und/oder zusätzlich zu anderen Merkmalen derart ausgebildet sein, dass eine Wand des zweiten Fluidkanals den Wärmeübertrager außen begrenzt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: ein erstes Ausführungsbeispiel eines erfindungsgemäßen Wärmetauschers,
- Fig. 2a bis 2e: eine detaillierte Darstellung des ersten Ausführungsbeispiels des erfindungsgemäßen Wärmetauschers,
- Fig. 3a: eine perspektivische Ansicht einer ersten, unteren Scheibe eines Scheibenpaars,
- Fig.3b: eine vergrößerte perspektivische Ansicht einer ersten, unteren Scheibe eines Scheibenpaars,
- Fig.4a: eine perspektivische Ansicht einer zweiten, oberen Scheibe eines Scheibenpaars,
- Fig. 4b: eine vergrößerte perspektivische Ansicht einer zweiten, oberen Scheibe eines Scheibenpaars,
- Fig. 5: eine Ansicht eines Schnitts durch den Wärmetauscher,
- Fig. 6a: eine perspektivische Ansicht eines Endbereichs des Scheibenstapels des Wärmetauschers,
- Fig. 6b: eine Ansicht des Scheibenstapels des Wärmetauschers,
- Fig. 7a: ein Schnitt durch ein Ausführungsbeispiel eines Scheibenpaars,
- Fig. 7b: ein Schnitt durch ein weiteres Ausführungsbeispiel eines Scheibenpaars,
- Fig. 7c: ein Schnitt durch ein weiteres Ausführungsbeispiel eines Scheibenpaars,
- Fig. 7d: ein Schnitt durch ein weiteres Ausführungsbeispiel eines Scheibenpaars,
- Fig. 7e: ein Schnitt durch ein weiteres Ausführungsbeispiel eines Scheibenpaars,
- Fig. 7f: ein Schnitt durch ein weiteres Ausführungsbeispiel eines Scheibenpaars,
- Fig. 8a: eine Ansicht eines Scheibenstapels, und
- Fig. 8b: eine Ansicht eines Scheibenstapels mit Anschlussflansch.

### Bevorzugte Ausführung der Erfindung

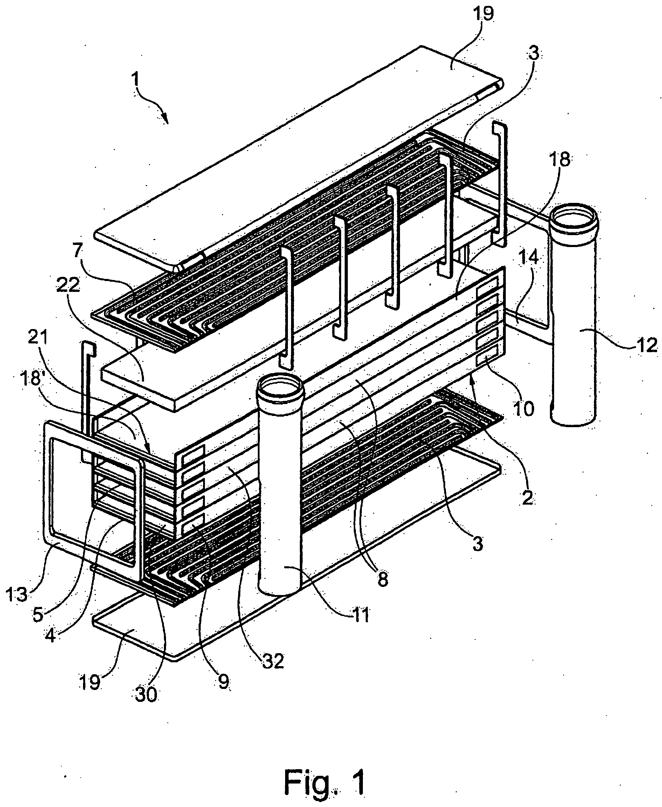

Die Figur 1 zeigt ein erstes Ausführungsbeispiel eines erfindungsgemäßen Wärmetauschers 1, der als Abgaskühler oder als Ladeluftkühler ausgebildet sein kann. Alternativ kann der Wärmetauscher 1 auch anderweitig angewendet werden. Vorteilhaft ist es, wenn als ein erstes Fluid ein gasförmiges Fluid verwendet wird. Dabei kann als erstes gasförmiges Fluid Abgas oder Luft, wie Ladeluft, verwendbar sein. Auch ist es vorteilhaft, wenn als zweites Fluid ein flüssiges Fluid verwendet wird. Hierfür ist Wasser oder ein Gemisch auf Wasserbasis als Kühlmittel oder ein anderweitiges Kühlmittel oder ein Kältemittel verwendbar.

Ein solcher Wärmetauscher 1 kann vorteilhaft als Abgaswärmetauscher in einem Kraftfahrzeug eingesetzt werden. Im Rahmen eines sogenannten Abgasrückführsystems (AGR-System) kann dabei von der Brennkraftmaschine des Kraftfahrzeuges ausgestoßenes Abgas zumindest teilweise durch ein flüssiges Kühlmittel eines Kühlmittelkreislaufes in dem Wärmetauscher gekühlt und dem Ansaugtrakt der Brennkraftmaschine wieder zugeführt werden. Ein solcher Wärmetauscher 1 kann ebenso vorteilhaft als Ladeluftkühler in einem Kraftfahrzeug eingesetzt werden. Dabei wird die Ladeluft kühlmittelgekühlt.

Der Wärmetauscher 1 besteht aus einem Stapel 2 von länglichen Scheibenpaaren 32, wobei jeweils zwei übereinander liegende Scheiben 18, 18' entlang ihrer Längserstreckung miteinander an ihrem Rand in Längsrichtung verlötet sind.

Werden die Scheibenpaare 32, die aus den Scheiben 18, 18' gebildet sind, aufeinander gestapelt, so bildet sich zwischen den jeweiligen Scheibenpaaren 32 ein erster Fluidkanal 30. Dabei wird der erste Fluidkanal 30 zwischen einer oberen Scheibe 18' eines unteren Scheibenpaares 32 und der unteren Scheibe 18 eines oberen Scheibenpaares 32 gebildet. Zwischen den beiden Scheiben 18, 18' eines Scheibenpaares 32 wird dabei ein zweiter Fluidkanal 4 gebildet. Der erste Fluidkanal 30 dient der Durchströmung des gasförmigen ersten Fluid, wobei der zweite Fluidkanal 4 der Durchströmung des zweiten flüssigen Fluids dient.

An der Schmalseite 21 ist der Scheibenverbund aus den beiden Scheiben 18, 18' offen gestaltet, wodurch ein Eintritt 5 bzw. ein Austritt 6 für das erste Fluid des ersten Fluidkanals gebildet wird. Dabei sind die beiden Scheiben an den Schmalseiten derart verbunden, dass der zweite Fluidkanal zwischen den beiden Scheiben 18, 18' durch eine Prägung, Falzung und/oder Verlötung abgeschlossen ist.

Das Scheibenpaar der Scheiben 18, 18' weist eine etwa u-förmige Kontur mit rechteckähnlicher Außengestalt auf, wobei die Scheiben 18, 18' an zwei Längsrändern und/oder an zwei Längsseiten miteinander verbunden, wie verlötet sind, wobei die Scheiben im verlöteten Zustand in einem zentralen Bereich beabstandet voneinander ausgebildet sind.

Im Inneren jedes Scheibenpaares 32 der Scheiben 18, 18' kann eine, auf dem Boden der unteren Scheibe 18 flächig ausgebildete oder aufliegende Kühlmittelführungsanordnung 3 integriert sein. Alternativ kann darauf auch verzichtet werden. Diese Kühlmittelführungsanordnung 3 kann dabei als Einprägung oder als Einprägungen in den Boden 60 der Scheibe 18 und/oder in den Boden 61 der Scheibe 18' eingeprägt sein, so dass das durch den im Innenraum des Scheibenpaares 18, 18' ausgebildeten Fluidkanal 4 strömende Fluid eine Führung und gegebenenfalls eine Kanalisierung erfährt. Dazu sind beispielsweise stegförmige Einprägungen vorgesehen, die in den zweiten Fluidkanal 4 zwischen den beiden Scheiben 18, 18' vorragen. Alternativ kann die Kühlmittelführungsanordnung 3 auch als separates Bauteil zwischen den Scheiben 18, 18' angeordnet sein, welches die Einprägungen oder Strukturen aufweist. Die Definition des Bodens 60, 61 der Scheibe 18 bzw. 18' ist dabei der im Wesentlichen ebene oder flache Bereich zwischen gegebenenfalls vorhandenen hoch gestellten Rändern einer Scheibe 18, 18'.

Zwischen einer oben angeordneten Scheibe 18' des einen Scheibenpaares 32 und einer dazu benachbarten Scheibe 18 eines anderen benachbarten Scheibenpaares 32 ist der erste Fluidkanal 30 angeordnet. Durch diesen Fluidkanal 30 strömt beispielsweise Abgas oder Ladeluft als erstes Fluid. Der zweite Fluidkanal 4 ist dabei zwischen den beiden Scheiben 18, 18' eines Scheibenpaares 32 angeordnet. Durch diesen Fluidkanal 4 strömt beispielsweise ein flüssiges Kühlmittel.

Die Zufuhr des ersten Fluids zu den ersten Fluidkanälen 30, also beispielsweise von Abgas, erfolgt über den Eintritt 5 des Scheibenstapels 2, welcher durch ein offenes Ende der schmalen Seitenabschnitte 21 der Scheibenpaare 32 der Scheiben 18, 18' gebildet wird. Das erste Fluid durchströmt den ersten Fluidkanal 30 und verlässt den Scheibenstapel 2 der Scheibenpaare 32 mit den Scheiben 18, 18' über den Austritt 6, welcher gegenüberliegend zum Eintritt 5 ausgebildet ist.
Alternative Ausführungsbeispiele können auch eine U-Durchströmung des Scheibenstapels 32 vorsehen, so dass der Austritt 6 und der Eintritt 5 auf der gleichen Seite des Scheibenstapels 2 angeordnet sind und an dem diesen Ein- und Austritten 5, 6 gegenüberliegenden Ende der Scheibenpaare 32 mit den Scheiben 18, 18' eine Umlenkung vorgesehen ist.

Die Kühlmittelkanalanordnung 3 weist mehrere in Längsrichtung der Scheiben 18 parallel zueinander verlaufende kühlmittelführende Stege 7 auf, die einzelne Teilkanäle bilden, deren offene Enden nahe dem Eintritt 5 bzw. dem Austritt 6 ersten Fluids in eine Richtung senkrecht zum Eintritt 5 bzw. Austritt 6 verlaufend geführt sind. Diese Stege führen die zwischen sich angeordneten Teilkanäle zu dem Ein- bzw. Austritt des zweiten Fluids, die als Öffnungen 9, 10 in den Seitenwänden bzw. Rändern 8 der Scheibe 18 vorgesehen sind.

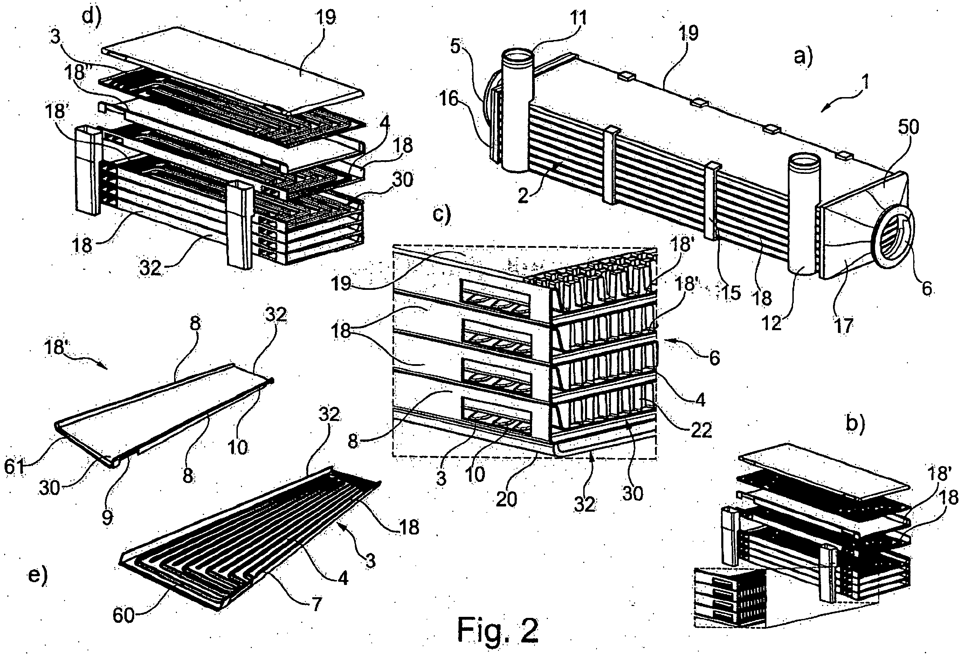

Jede Scheibe 18 weist in ihrer Längserstreckung beidseitig einen hoch gebogenen Rand 8 in Form eines Falzes auf, welcher sich senkrecht in Richtung der darüber liegenden, identisch ausgebildeten benachbarten Scheibe 18 erstreckt, siehe hierzu Fig. 2c.

Die Scheibe 18' weist ebenso einen beiderseitig hoch gestellten jeweiligen Rand 40 auf, der nach Art eines Falzes hochgebogen ist, wobei dieser seitlich außen wieder nach unten gebogen ist. Dadurch ist der Rand 40 quasi doppellagig ausgebildet, wobei zwischen den beiden Lagen 41, 42 ein Abstand vorgesehen ist. Die Scheibe 18' liegt auf der Scheibe 18 und die Ränder 40 liegen zwischen den Rändern 8. Dabei berühren sich vorteilhaft die außen liegenden Wandungen der Ränder 40 bzw. 8, also die Lage 41 mit dem Rand 8.

Je nach erforderlicher Kühlleistung kann eine Mehrzahl solcher verbundener Scheibenpaare 32 mit den Scheiben 18, 18' als Scheibenstapel 2 übereinander gestapelt werden.
In Längsrichtung der Scheibenpaare 32 ist im Endbereich der jeweils zusammengeführten Enden der Scheiben 18, 18'in dem Rand 8 der Scheibe 18 jeweils eine Öffnung 9 bzw. 10 eingearbeitet. Diese Öffnungen 9, 10 dienen dem Austritt bzw. Eintritt des zweiten Fluids, wie des Kühlmittels. Die Öffnungen der jeweiligen Scheibenpaare sind im Scheibenstapel 2 übereinanderliegend angeordnet. Die übereinander liegenden Öffnungen 9 bzw. 10 mehrerer Scheibenpaare 32 der Scheiben 18, 18' werden von jeweils einem Kühlmittelsammelkanal 11, 12 vollständig überdeckt und fluidverbunden. Dabei kann der jeweilige Kühlmittelsammelkanal 11, 12 eine nicht weiter dargestellte Ausnehmung aufweisen, welche die Öffnungen 9 bzw. 10 abdichtend überdeckt. Der Kühlmittelsammelkanal 11, 12 ist dabei vorteilhaft als Tiefziehteil oder Rohrsegment ausgeführt und wird über die Öffnungen 9 oder 10 der Scheiben 18 geschoben.

An der Schmalseite 21 ist der Scheibenstapel 2 jeweils von einem Rahmen 13, 14 gefasst. An den Schmalseiten 21 des Scheibenstapels 2 sind die Scheiben 18 weiterhin so ausgeformt, dass ohne oder optional zusammen mit dem Rahmen 13, 14 eine kontinuierliche umlaufende Kontur entsteht, über die jeweils ein Diffusor 50, ein Flansch oder ein Adapter übergesteckt und leckagefrei verlötet werden kann. Alternativ zur Gestaltung der Rahmen 13, 14 können diese auch mit einem Lochbild entsprechend der beabstandeten Fluidkanäle ausgebildet sein.

Weiterhin ist es vorteilhaft, wenn an zumindest einen oder beide Rahmen ein Anschluss der Gasführung und/oder Spannmittel zum Fixieren nach dem Fügen vorgesehen sind.

Der Wärmetauscher 1 schließt an der Oberseite mit einer randlosen oder berandeten Abdeckscheibe 19 ab. Diese Abdeckscheibe 19 kann auf dem Rand 8 oder zwischen den Rändern der obersten Scheibe 18 bzw. beider Scheiben 18, 18' auf- oder zwischenliegen. Mittels der Abdeckscheibe 19 wird der oberste Fluidkanal 30, insbesondere als Kühlmittelkanal, verschlossen, ohne dass zusätzliche Bauelemente notwendig werden.

Bodenseitig dient eine ebenfalls randlose Grundscheibe 20 zur Stabilisierung der letzten unteren Scheibe 18.

Der zweite Fluidkanal 4 zwischen den beiden Scheiben 18,18' ist etwa u-förmig ausgebildet. Dabei nimmt der Fluidkanal 4 einen ersten Teilbereich 53 ein, der quasi eben ausgebildet ist und im Wesentlichen parallel zum Boden 60 der Scheibe 18 verläuft. Weiterhin nimmt der Fluidkanal 30 zwei seitliche Teilbereiche 51, 52 ein, die im Wesentlichen senkrecht zur Ebene des Bodens 60 der Scheibe 18 ausgerichtet ist. Die Teilbereiche 51, 52 sind dabei so gestaltet, dass der Fluidkanal 30 an den Rändern höher ausgerichtet ist als im mittleren Teilbereich 53 des Bodens 60 der Scheibe 18.

Wird auf dieses derart gestaltete Scheibenpaar 32 ein weiteres gleiches Scheibenpaar 32 aufgelegt, so verschließt die untere Scheibe 18 des oberen Scheibenpaares 32 den ersten Fluidkanal 30 zwischen dem unteren und dem oberen Scheibenpaar 32, indem es sich auf die Ränder 8 der unteren Scheiben 18 und/oder der oberen Scheibe 18' des unteren Scheibenpaares 32 legt.

Figur 2 zeigt Ausschnitte des Wärmetauschers 1, wie dieser in Figur 1 dargestellt ist. In Figur 2a ist ein montierter erfindungsgemäßer Wärmetauscher 1 dargestellt, bei welchem der Scheibenstapel 2 mittels senkrecht zu den Scheiben 18, 18' verlaufenden Klammern 15 gehalten wird. Auf den Eintritt 5 und dem Austritt 6 des ersten Fluids, wie beispielsweise Abgas oder Ladeluft, ist jeweils ein Diffusor als Sammler 16, 17 aufgesetzt, wobei nahe jeweils eines Sammlers 16, 17 die beiden Sammelrohre 11 bzw. 12 für das zweite Fluid, wie beispielsweise Kühlmittel, auf derselben Seite des Scheibenstapels 2 angeordnet sind. Alternativ dazu können die beiden Sammelrohre 11, 12 auch an gegenüberliegenden Seitenflächen des Scheibenstapels angeordnet sein. Dies würde bedeuten, dass ein Sammelrohr 11, 12 in Strömungsrichtung des ersten Fluids rechts des Scheibenstapels 2 und eines der Sammelrohre 12, 11 in Strömungsrichtung des ersten Fluids betrachtet links des Scheibenstapels 2 angeordnet ist.

Die Figur 2b und 2c zeigen einen Ausschnitt aus dem Wärmetauscher 1, insbesondere im Bereich des Austritts 6 des ersten Fluids. Zur Verdeutlichung der Struktur des Wärmeübertragers sind im Fluidkanal 4 Turbulatoren 22 angeordnet dargestellt. Die Turbulatoren 22, auch Rippe oder Wellrippe genannt, sind auf der Scheibe 18' positioniert und werden von der darüber liegenden Scheibe 18 abgedeckt, welche auf den Rändern 8, die senkrecht aus der darunterliegenden Scheibe 18 und/oder aus der Scheibe 18' ausgeformt sind, aufsitzt und mit dieser verlötet ist.

Entlang der Längserstreckung der Ränder 8 sind die Öffnungen 10 in dem Rand 8 angeordnet, wobei die Öffnungen 10 etwa die Höhe des Randes 8 annehmen. Dabei sind die Öffnungen einen Steg weit vom Boden der Scheibe 18 entfernt nach oben versetzt angeordnet. Auch ist oberhalb der Öffnung ein

Steg bis zum oberen Rand des Randes 8 angeordnet, so dass die Öffnung von einem Steg nach oben und unten abgegrenzt ist und seitlich in Strömungsrichtung des ersten Fluids betrachtet ebenso von dem Material des Randes 8 begrenzt ist.

In Fig. 2c sind die zusammengefügten Scheiben 18 und 18' zu erkennen, welche zwischen sich den zweiten Fluidkanal u-förmig bilden.

Der sich über die Öffnungen 10 erstreckende Kühlmittelsammelkanal 12 kann neben der Funktion der Kühlmittelführung auch als Spannklammer als Ersatz für die Lötvorrichtung oder für eine Gewichtsauflage beim Löten eingesetzt werden. In den Kühlmittelsammelkanal 12 können auch weitere Funktionen, wie die Befestigung von Rohrleitungen in der Motorperipherie oder Haltepunkte für den Kühler, integriert werden, siehe Figur 2d.

Im vorgeschlagenen Wärmetauscher 1 sind die zweiten Fluidkanäle 30, insbesondere als Kühlmittelkanäle, alternierend zu den ersten Fluidkanälen 4, insbesondere als Abgaskanäle, ausgebildet. Die zweiten Fluidkanäle 30 sind dabei im Schnitt u-förmig ausgebildet und fassen die ersten Fluidkanäle 4 an drei Seiten ein, so dass die ersten Fluidkanäle 4 von drei Seiten durch das Fluid des zweiten Fluidkanals gekühlt werden können. Weiterhin begrenzt der zweite Fluidkanal des darüber liegenden Scheibenpaares den ersten Fluidkanal, so dass der benachbarte zweite Fluidkanal die vierte Seite des ersten Fluidkanals begrenzt und das dadurch strömende Fluid kühlt den ersten Fluidkanal. Die Scheiben 18, 18' sind so ausgeführt, dass eine Längsverlötung entweder an einer weitgehenden seitlichen Lötnaht oder vertikal an dem schon erläuterten innen angeformten Rand 8 der Scheiben 18, 18' erfolgt.

Im Gegensatz zum Stand der Technik steht der Rand 8 im Wesentlichen senkrecht zum Boden der Scheiben 18, 18' des Scheibenpaares ab und lässt so den zweiten Fluidkanal, insbesondere für das Kühlmittel nach außen abgrenzen, so dass die Außenwand des Wärmeübertragers mit dem zweiten Fluid, insbesondere dem Kühlmittel in Kontakt steht. Die Außenwand ist somit gekühlt ausbildbar, was ein großer Vorteil für das Umfeld des Wärmetauschers ist, weil dieses Umfeld nicht so heiß wird, wie das erste Fluid. Durch die seitliche Kontur des Randes 8 wird weiterhin eine glatte seitliche Fläche am Scheibenstapel 2 ausgebildet, so dass die Sammelrohre zum einen gut befestigt und abgedichtet werden können und der Scheibenstapel gut eingefasst und damit verspannt werden kann. Dadurch wird eine gute Dichtigkeit beim Löten erreicht.

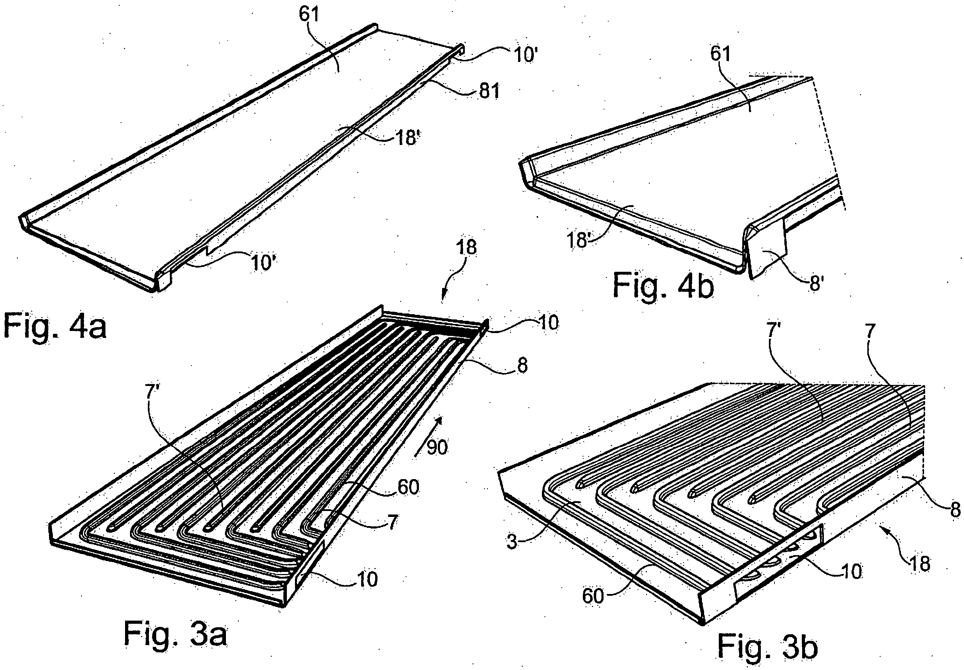

Die Figuren 3a und 3b zeigen eine untere Scheibe 18 des Scheibenpaares. Dabei weist die Scheibe eine etwa rechteckige längliche Kontur auf. An den beiden gegenüberliegenden lateralen Seiten der Scheibe 18 ist ein Rand 8 hochgebogen, der etwa im rechten Winkel vom Boden bzw. von der Ebene des Bodens 60 hoch steht. An den Enden bzw. benachbart zu den Enden der Scheibe sind in einem Rand 8 Öffnungen 10 eingebracht zur Ein- bzw. Ausströmung eines Fluids. Die Öffnungen 10 sind dabei im Wesentlichen rechteckig ausgeformt.

Im Boden 60 sind als Kühlmittelführungsanordnung 3 Stege 7 eingeprägt, die der Bildung von Teilkanälen dienen und die einen Strömungspfad zwischen den Öffnungen 10 ausbilden. Dabei sind einzelne der Stege 7 oder die Stege 7 derart ausgeformt, dass sie einen rechteckigen Verlauf von der einen Öffnung 10 zu der anderen Öffnung 10 aufweisen. In einem ersten Abschnitt verlaufen sie senkrecht zur Hauptausrichtung 90 der Scheibe 18, in einem mittleren Abschnitt verlaufen sie parallel zur Hauptausrichtung 90 der Scheibe 18 und in einem weiteren Abschnitt verlaufen sie wiederum senkrecht zur Hauptausrichtung 90 der Scheibe 18.

Zwischen den derart geformten Stegen 7 können auch zweite Stege 7' angeordnet sein, die nur eine Ausrichtung parallel zur Hauptausrichtung 90 aufweisen.

Die Figuren 4a und 4b zeigen eine obere Scheibe 18' des Scheibenpaares. Dabei weist die Scheibe 18' eine etwa rechteckige längliche Kontur auf. An den beiden gegenüberliegenden lateralen Seiten der Scheibe 18' ist ein Rand 8' hochgebogen, der etwa im rechten Winkel vom Boden bzw. von der Ebene des Bodens 61 hoch steht. Dabei ist der Rand 8' doppelwandig ausgebildet. An den Enden bzw. benachbart zu den Enden der Scheibe 18' sind dem äußeren Randblech des Rands 8' Öffnungen 10' eingebracht zur Ein- bzw. Ausströmung eines Fluids. Die Öffnungen 10' sind dabei im Wesentlichen rechteckig ausgeformt.

Der Boden 61 ist eben ausgebildet oder er kann nach unten in den zweiten Fluidkanal reichende Stege oder anderweitige Einprägungen aufweisen.

Am vorderen und am hinteren Endbereich der Scheibe 18' ist der Boden als auch die Ränder derart geprägt, dass beim Auflegen der Scheibe 18' auf die Scheibe 18 ein abgedichteter Endbereich entsteht.

Wird die Scheibe 18' auf die Scheibe 18 aufgelegt, so entsteht zwischen den beiden Scheiben 18, 18' der zweite Fluidkanal 4. Die beiden Scheiben 18, 18' sind bis auf die Öffnungen 10 abgedichtet zueinander verbunden.

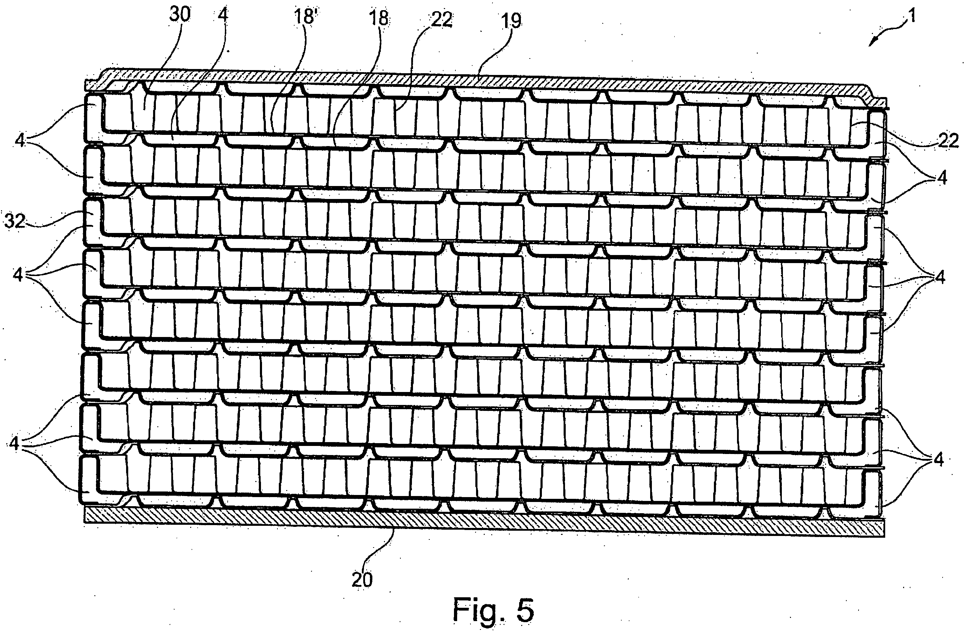

Die Figur 5 zeigt einen Schnitt durch den Wärmetauscher 1, der durch Aufeinanderstapeln von Scheibenpaaren 32 entsteht. Dabei sind die Scheibenpaare gebildet durch Scheiben 18 und 18'. Zwischen einer unteren Scheibe 18 und einer oberen Scheibe 18' ist der Fluidkanal 4 gebildet, insbesondere zur Durchströmung von Kühlmittel. Zwischen einer oberen Scheibe 18' eines Scheibenpaares 32 und der unteren Scheibe 18 eines benachbarten Scheibenpaares ist der erste Fluidkanal 30 angeordnet.

Im ersten Fluidkanal 30 kann eine Turbulenzeinlage 22 vorgesehen sein.

Man erkennt in Figur 5, dass der zweite Fluidkanal 4 den ersten Fluidkanal 30 umgreift. An den Seiten des Stapels 2 sind zweite Fluidkanäle 4 angeordnet, die den Stapel nach außen begrenzen.

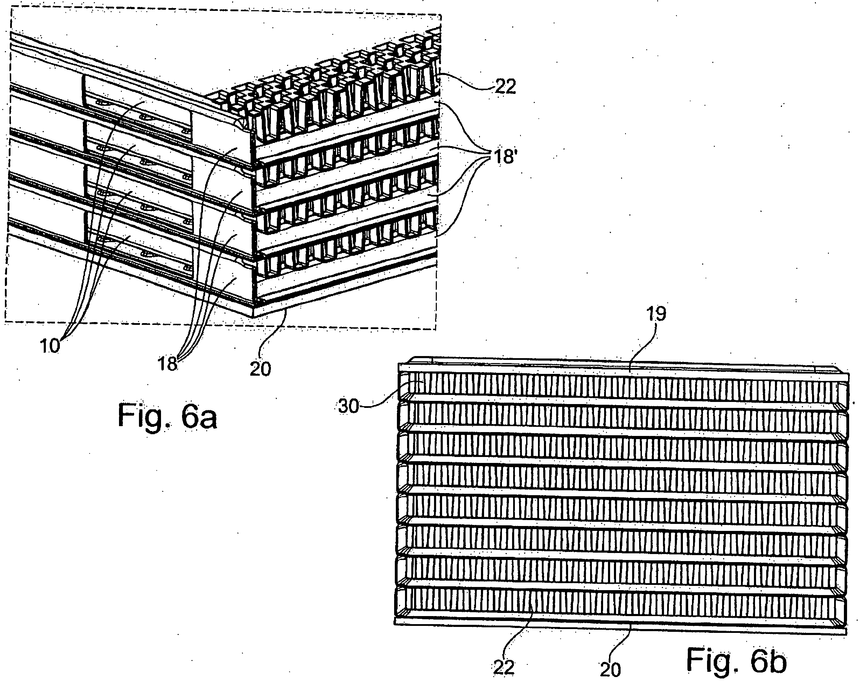

Die Figuren 6a und 6b zeigen einen Endbereich des Stapels 2 der Scheibenpaare 32. Dabei sind nur die ersten Fluidkanäle 30 zu erkennen, weil die zweiten Fluidkanäle durch die Falzung bzw. Prägung der Scheiben 18' in deren Endbereich abgeschlossen sind.

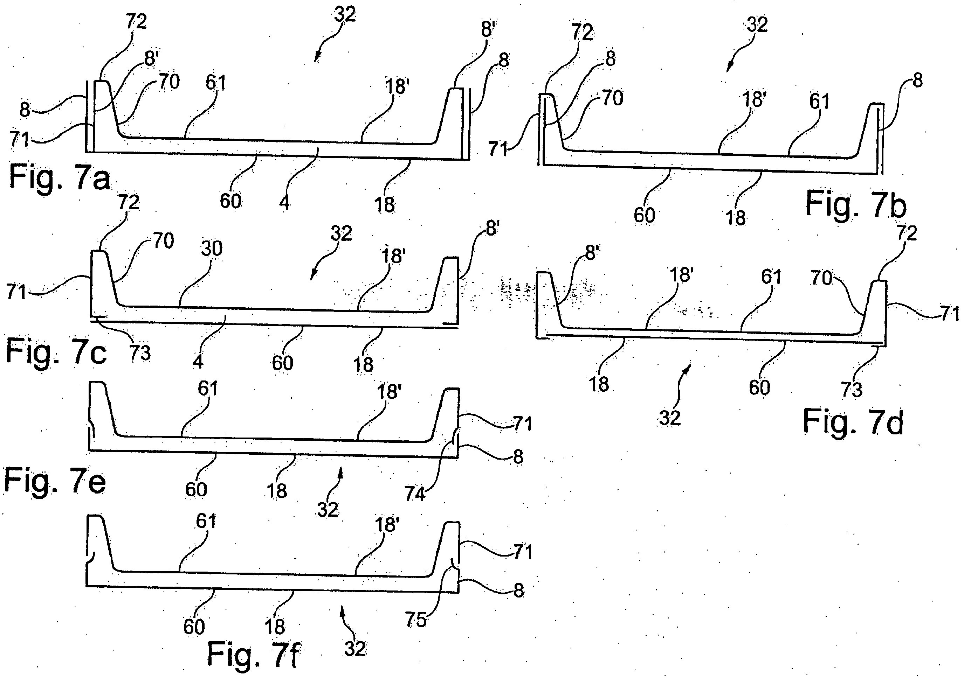

Die Figuren 7a bis 7f zeigen im Schnitt Variationen von Scheibenpaaren 32.

Die Figur 7a zeigt einen Schnitt durch ein Scheibenpaar 32 gemäß den vorhergehenden Figuren. Die Scheibe 18 als die untere Scheibe des Scheibenpaares 32 ist im Wesentlichen u-förmig mit einem ebenen Boden 60 und etwa rechtwinklig dazu abstehenden Rändern 8 ausgebildet. Die Scheibe 18' ist ebenso etwa u-förmig mit einem ebenen Boden 61 und hochgestellten Rändern 8' ausgebildet. Dabei sind die Ränder 8' doppelwandig mit einem inneren Wandbereich 70 und einem äußeren Wandbereich 71 und einer oberen Verbindungswand 72 ausgebildet. Der äußere Wandbereich 71 liegt dabei innen an dem Rand 8 der Scheibe 18 an, wobei die Ränder 8' zwischen den Rändern 8 angeordnet sind. Zwischen den beiden Scheiben 18, 18' ist der zweite Fluidkanal 4 ausgebildet. Oberhalb des Bodens 61 und zwischen den gegenüberliegenden Rändern 8' ist der erste Fluidkanal ausgebildet, wenn zwei Scheibenpaare aufeinander liegen.

Die Figur 7b zeigt einen Schnitt durch ein alternatives Scheibenpaar. Die Scheibe 18 als die untere Scheibe des Scheibenpaares 32 ist im Wesentlichen u-förmig mit einem ebenen Boden 60 und etwa rechtwinklig dazu abstehenden Rändern 8 ausgebildet. Die Scheibe 18' ist ebenso etwa u-förmig mit einem ebenen Boden 61 und hochgestellten Rändern 8' ausgebildet. Dabei sind die Ränder 8' doppelwandig mit einem inneren Wandbereich 70 und einem äußeren Wandbereich 71 und einer oberen Verbindungswand 72 ausgebildet. Der äußere Wandbereich 71 liegt dabei außen an dem Rand 8 der Scheibe 18 an. Der Rand 8' übergreift dabei den Rand 8 teilweise. Zwischen den beiden Scheiben 18, 18' ist der zweite Fluidkanal 4 ausgebildet. Oberhalb des Bodens 61 und zwischen den gegenüberliegenden Rändern 8' ist der erste Fluidkanal ausgebildet, wenn zwei Scheibenpaare aufeinander liegen.

Die Figur 7c zeigt einen Schnitt durch ein weiteres alternatives Scheibenpaar 32. Die Scheibe 18 als die untere Scheibe des Scheibenpaares 32 ist im Wesentlichen eben mit einem ebenen Boden 60 ausgebildet. Die Scheibe 18' ist dabei etwa u-förmig mit einem ebenen Boden 61 und hochgestellten Rändern 8' ausgebildet. Dabei sind die Ränder 8' doppelwandig mit einem inneren Wandbereich 70 und einem äußeren Wandbereich 71 und einer oberen Verbindungswand 72 ausgebildet. Die äußere Wand weist dabei unten einen nach innen weisenden weiteren Wandbereich 73 auf, der auf dem ebenen Boden 60 der Scheibe 18 aufliegt. Zwischen den beiden Scheiben 18, 18' ist der zweite Fluidkanal 4 ausgebildet. Oberhalb des Bodens 61 und zwischen den gegenüberliegenden Rändern 8' ist der erste Fluidkanal ausgebildet, wenn zwei Scheibenpaare aufeinander liegen.

Die Figur 7d zeigt einen Schnitt durch ein weiteres alternatives Scheibenpaar 32. Die Scheibe 18 als die untere Scheibe des Scheibenpaares 32 ist im Wesentlichen eben mit einem ebenen Boden 60 ausgebildet. Die Scheibe 18' ist dabei etwa u-förmig mit einem ebenen Boden 61 und hochgestellten Rändern 8' ausgebildet. Dabei sind die Ränder 8' doppelwandig mit einem inneren Wandbereich 70 und einem äußeren Wandbereich 71 und einer oberen Verbindungswand 72 ausgebildet. Die äußere Wand weist dabei unten einen nach innen weisenden weiteren Wandbereich 73 auf, der unter den ebenen Boden 60 der Scheibe 18 greift und an diesem von unten anliegt. Zwischen den beiden Scheiben 18, 18' ist der zweite Fluidkanal 4 ausgebildet. Oberhalb des Bodens 61 und zwischen den gegenüberliegenden Rändern 8' ist der erste Fluidkanal ausgebildet, wenn zwei Scheibenpaare aufeinander liegen.

Die Figur 7e zeigt einen Schnitt durch ein weiteres alternatives Scheibenpaar 32. Die Scheibe 18 als die untere Scheibe des Scheibenpaares 32 ist im Wesentlichen u-förmig mit einem ebenen Boden 60 und etwa rechtwinklig dazu abstehenden Rändern 8 ausgebildet. Die Scheibe 18' ist ebenso etwa u-förmig mit einem ebenen Boden 61 und hochgestellten Rändern 8' ausgebildet. Dabei sind die Ränder 8' doppelwandig mit einem inneren Wandbereich 70 und einem äußeren Wandbereich 71 und einer oberen Verbindungswand 72 ausgebildet. Der äußere Wandbereich 71 weist an seinem unteren Bereich eine Abbiegung 74 auf, die dabei innen an dem Rand 8 der Scheibe 18 anliegen. Zwischen den beiden Scheiben 18, 18' ist der zweite Fluidkanal 4 ausgebildet. Oberhalb des Bodens 61 und zwischen den gegenüberliegenden Rändern 8' ist der erste Fluidkanal ausgebildet, wenn zwei Scheibenpaare aufeinander liegen.

Die Figur 7f zeigt einen Schnitt durch ein weiteres alternatives Scheibenpaar 32. Die Scheibe 18 als die untere Scheibe des Scheibenpaares 32 ist im Wesentlichen u-förmig mit einem ebenen Boden 60 und etwa rechtwinklig dazu abstehenden Rändern 8 ausgebildet. Die Scheibe 18' ist ebenso etwa u-förmig mit einem ebenen Boden 61 und hochgestellten Rändern 8' ausgebildet. Dabei sind die Ränder 8' doppelwandig mit einem inneren Wandbereich 70 und einem äußeren Wandbereich 71 und einer oberen Verbindungswand 72 ausgebildet. Der Rand 8 weist an seinem oberen Bereich eine Abbiegung 75 auf, die dabei innen an dem Wandbereich 71 der Scheibe 18' anliegen. Zwischen den beiden Scheiben 18, 18' ist der zweite Fluidkanal 4 ausgebildet. Oberhalb des Bodens 61 und zwischen den gegenüberliegenden Rändern 8' ist der erste Fluidkanal ausgebildet, wenn zwei Scheibenpaare aufeinander liegen.

Im Weiteren sollen Sonderausführungen des erfindungsgemäßen Abgaswärmetauschers 1 beschrieben werden, welche nicht näher in Zeichnungen dargestellt sind. Zunächst soll ein I-Flow, also eine geradlinige Durchströmung, für zwei Kühlmittelkreisläufe betrachtet werden. Dabei haben die Scheiben zusätzlich zwei seitliche Ein- bzw. Austritte vor bzw. nach einer Trennung eines Kühlmittelkanals zwischen dem vorderen und dem hinteren Teil des Kühlmittelkanals. Eine solche Ausführung ist besonders geeignet für Applikationen mit Hochtemperatur- und Niedertemperatur-Kühlmittelkreislauf. Die Trennung des Kühlmittelkanals kann dabei vollständig abdichtend oder unter Zulassung einer geringen Leckagemenge zwischen Hochtemperaturund Niedertemperatur-Kühlmittelteil erfolgen. Bei Bedarf können analog auch mehr als zwei Kühlmittelkreisläufe dargestellt werden.

Bei einem U-Flow, also mit umgelenkter Durchströmung, wird anstelle eines Diffusors am Umlenkende ein geschlossener Kasten angeordnet, wobei auf der Eintrittsseite des ersten Fluids, also des Abgases, die Abdichtung der Fluten durch Anlage einer Trennebene in Form eines Bleches oder einer Gusswand zwischen dem Eintritt und dem Austritt für das erste Fluid im Bereich der Vorderkante eines Fluidkanals für das zweite Fluid erfolgt, wobei gegebenenfalls geringe Leckagemengen des ersten Fluids zugelassen werden könnten. Alternativ können die Fluten in jedem Abgaskanal durch eine kontinuierliche Rippe, beispielsweise eine Glattrippe, eine Well- bzw. Dimpelrippe ohne geschnittene Stege oder durch ein in jeder Ebene in die Stegrippe eingestecktes Trennblech getrennt werden. Die Abdichtung zwischen den beiden Fluten erfolgt dann direkt an der Rippe, wobei die Trennebene die Rippen bzw. die Scheibenkontur des Scheibenstapels aufnehmen muss. Ein in die Rippe eingestecktes Trennblech kann dabei auch die Scheibenkontur mit aufnehmen, so dass die Trennebene zwischen Eintritt und Austritt des Abgases geometrisch einfacher gestaltet sein kann.

Ein U-Flow mit zwei Kühlmittelkreisläufen wird dann erreicht, wenn die aufgesteckten Kühlmittelsammelkästen eine Trennwand enthalten, die die Kühlmittelsammelkästen am jeweiligen Ende in jeweils zwei Segmente teilt. In einem Segment erfolgt jeweils die Zu- bzw. Ableitung des Kühlmittels aus dem einen oder anderen Kreislauf. Alternativ können die zwei Kühlmittelsammelkästen übereinander aufgesetzt werden. Weiterhin kann die Schlitzung der Kühlmittelkanäle für den Hochtemperaturkreislauf auf der einen Seite des Abgaswärmetauschers und für den Niedertemperaturkreislauf auf der jeweils anderen Seite des Abgaswärmetauschers erfolgen. In der Summe werden dann vier Kühlmittelsammelkästen für den Ein- und Austritt der beiden Medien benötigt. Schließlich können die Möglichkeiten kombiniert werden, da an einem Ende des Abgaswärmetauschers ein kombinierter Kasten mit Trennwand, am anderen Ende getrennte Kühlmittelsammelkästen an den beiden Seiten des Abgaswärmetauschers angeordnet sind. Auch hier können analog bei Bedarf mehr als zwei Kühlmittelkreisläufe ausgebildet werden.

Bei der Ausbildung von zwei parallel verlaufenden Kühlmittelkreisläufen wird der Kühlmittelkanal längs durch Sicken in zwei oder mehr Fluten dicht oder unter Zulassung einer kleinen Leckage getrennt, durch die ein Medium U-förmig oder in Mäanderform in mehreren Schleifen geführt sein kann. Die zweiten Fluten können dabei auch mit zwei unterschiedlichen Medien betrieben werden, da eine getrennte Versorgung der Fluten von der einen bzw. anderen Seite des Abgaskühlers möglich ist.

Aufgrund der erläuterten Lösung ist eine gewichtsreduzierte und bauformreduzierte Anordnung des Abgaswärmetauschers oder des Ladeluftkühlers möglich, welcher thermisch hoch belastbar ist.

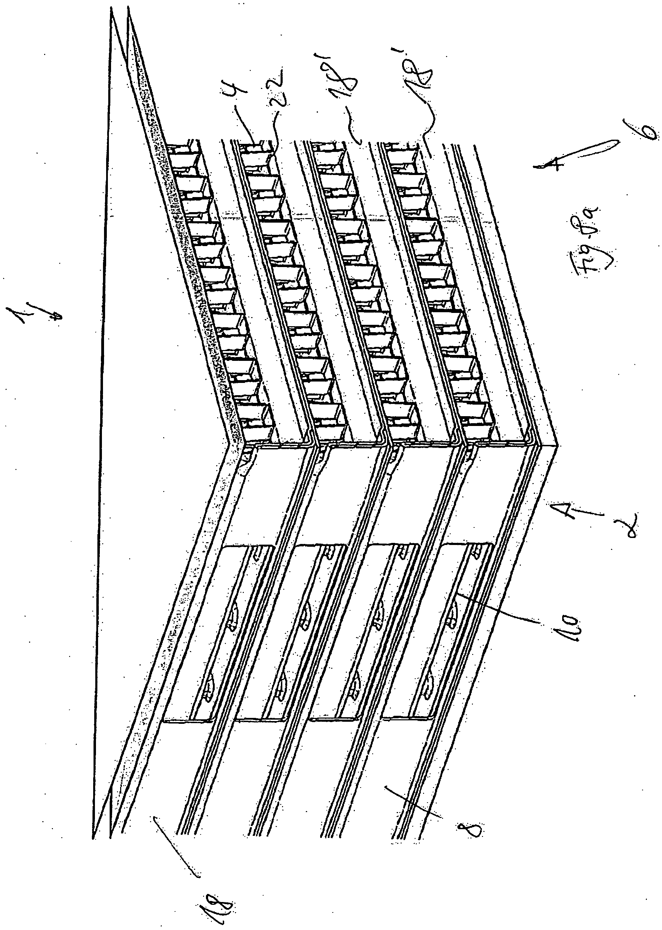

Figur 8a zeigt einen Ausschnitt eines Wärmetauschers 1. In Figur 8a ist ein erfindungsgemäßer Wärmetauscher 1 dargestellt, bei welchem der Scheibenstapel 2 mit den Scheiben 18, 18' aufgebaut ist.

Die Figur 8a zeigt einen Ausschnitt aus dem Wärmetauscher 1, insbesondere im Bereich des Austritts 6 des ersten Fluids. Zur Verdeutlichung der Struktur des Wärmeübertragers sind im Fluidkanal 4 Turbulatoren 22 angeordnet dargestellt. Die Turbulatoren 22, auch Rippe oder Wellrippe genannt, sind auf der Scheibe 18' positioniert und werden von der darüber liegenden Scheibe 18 abgedeckt, welche auf den Rändern 8, die senkrecht aus der darunterliegenden Scheibe 18 und/oder aus der Scheibe 18' ausgeformt sind, aufsitzt und mit dieser verlötet ist.

Entlang der Längserstreckung der Ränder 8 sind die Öffnungen 10 in dem Rand 8 angeordnet, wobei die Öffnungen 10 etwa die Höhe des Randes 8 annehmen. Dabei sind die Öffnungen einen Steg weit vom Boden der Scheibe 18 entfernt nach oben versetzt angeordnet. Auch ist oberhalb der Öffnung ein Steg bis zum oberen Rand des Randes 8 angeordnet, so dass die Öffnung von einem Steg nach oben und unten abgegrenzt ist und seitlich in Strömungsrichtung des ersten Fluids betrachtet ebenso von dem Material des Randes 8 begrenzt ist.

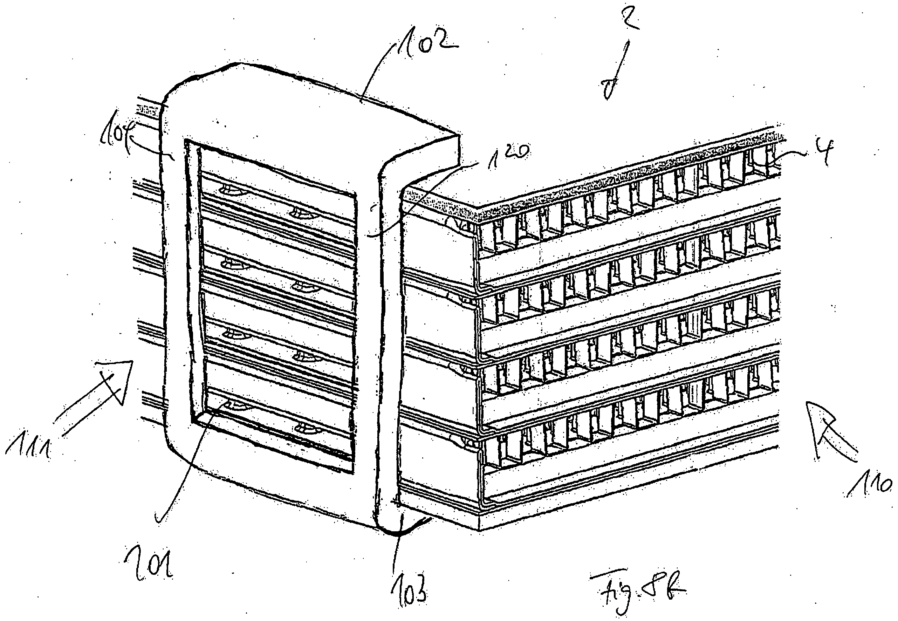

Die Figur 8b zeigt den Scheibenstapel 2, bei welchem als Anschlussflansch 100 ein gebogenes Blech vorgesehen ist. Das gebogene Blech 100 ist als U-förmiges Blech mit einem oberen und einem unteren endseitigen Abschnitt 102, 103 ausgebildet, wobei zwischen diesen beiden endseitigen Abschnitten 102, 103 ein mittlerer Abschnitt 104 vorgesehen ist, welcher das Fenster 101 aufweist. Dieses Fenster 101 ist derart angeordnet, dass es mit den Öffnungen 10 kommuniziert. Pfeil 110 charakterisiert den Gaseintritt in die Fluidkanäle 4 und Pfeil 111 charakterisiert den Kühlmitteleintritt bzw. -austritt durch das Fenster 101.

Das Fenster 101 ist von einem Rahmen 120 umgeben, welcher vorzugsweise eben ausgebildet ist und als Anlagefläche für einen fahrzeugseitigen Kühlmittelanschluss ausgebildet ist und als Dichtfläche fungiert.

Der Anschlussflansch kann als gebogenes Blechteil oder alternativ auch als Gußteil o.ä. ausgebildet sein.

Vorteilhaft ist es, wenn eine stoffschlüssige Verbindung zwischen Diffusor und Kühlmittelkasten auf der Gaseintrittsseite vorliegt. Dies bewirkt eine thermische Entlastung.

Auch ist es vorteilhaft, wenn eine stoffschlüssige Verbindung zwischen Diffusor und Kühlermatrix, also den Fluidkanälen 4, auf allen Seiten mit Ausnahme der Kühlmittelkastenseite ausgeführt ist.

Auch ist es vorteilhaft, wenn bei einem Überlappen von Wänden eine Reduzierung der Wandstärke der Materialien und Blechen vorgesehen sein kann. Dabei kann eine Wandblechstärke von 0,2mm bis 0,5mm, bevorzugt 0,2mm bis 0,3mm vorgesehen sein.

Die Höhe des Kühlmittelkanals als Fluidkanal beträgt vorzugsweise weniger oder gleich 2mm.

Der Abstand der Sicken 7 insbesondere im Fluidkanal beträgt vorzugsweise weniger oder gleich 3mm bis 15mm, bevorzugt 4mm bis 8mm.

Auch ist es vorteilhaft, wenn der erste und/oder zweite Fluidkanal eine Turbulenzeinlage aufweist. Eine Turbulenzeinlage dient der Leistungssteigerung und/oder der Erhöhung der Festigkeit und der Abstützung im Lötprozess.

## Patentansprüche

1. Wärmetauscher, insbesondere Abgaskühler oder Ladeluftkühler, umfassend einen, aus mehreren länglichen Scheibenpaaren (32) bestehenden Scheibenstapel (2), wobei jeweils zwei miteinander verbundene Scheiben (18,18') einen zweiten Fluidkanal (4) zwischen sich bilden und zwischen zwei Scheibenpaaren ein erster Fluidkanal (30) gebildet ist, wobei ein erster Fluidkanal (30) von zwei zweiten Fluidkanälen (4) umgriffen ist, wobei jeder zweite Fluidkanal (4) an mindestens einen Kühlmittelsammelkanal (11,12) angeschlossen ist, wobei die zwei miteinander verbundenen Scheiben (18,18') eines Scheibenpaares (32) beidseitig an ihren Rändern (8) entlang ihrer Längserstreckung und/oder Quererstreckung verlötet oder verschweißt sind, **dadurch gekennzeichnet, dass** in mindestens einem der ausgeformten Ränder (8) wenigstens eine Öffnung (9, 10) zur Verbindung des zweiten Fluidkanals (4) mit dem Kühlmittelsammelkanal (11, 12) ausgebildet ist.

2. Wärmetauscher nach Anspruch 1, **dadurch gekennzeichnet, dass** die miteinander verbundenen zwei Scheiben (18,18') eines Scheibenpaares (32) einen u-förmigen zweiten Fluidkanal (4) oder einen z-förmigen zweiten Fluidkanal zwischen sich bilden.

3. Wärmetauscher nach einem der vorhergehenden Ansprüche, **dadurch gekennzeichnet, dass** der erste Fluidkanal (30) vierseitig von dem zweiten Fluidkanal eingefasst ist.

4. Wärmetauscher nach einem der vorhergehenden Ansprüche, **dadurch gekennzeichnet, dass** ein senkrecht an der unteren Scheibe (18) und/oder an der oberen Scheibe (18') ausgeformter Rand (8) mit einem Boden der darüber liegenden unteren Scheibe (18) verlötet ist.

5. Wärmetauscher nach zumindest einem der vorhergehenden Ansprüche, **dadurch gekennzeichnet, dass** je eine Öffnung (9, 10) im Rand (8) der Scheibe (18) nahe einem Eintritt (5) und einem Austritt (6) des ersten Fluids ausgebildet ist, wobei der Eintritt (5) und der Austritt (6) des ersten Fluids durch die Schmalseiten (21) der zwei miteinander verbundenen Scheiben (18, 18') gebildet sind und die Öffnungen (9, 10) mehrerer miteinander verbundener Scheibenpaare (32), welche aufeinanderliegend angeordnet sind, annähernd übereinander liegen.

6. Wärmetauscher nach mindestens einem der vorhergehenden Ansprüche, **dadurch gekennzeichnet, dass** zum Verschluss des obersten zweiten Fluidkanals (4) eine randlose oder berandete Abdeckscheibe (19) vorgesehen ist.

7. Wärmeübertrager nach einem der vorhergehenden Ansprüche, **dadurch gekennzeichnet, dass** der Kühlmittelsammelkanal als Sammelrohr ausgebildet ist.

8. Wärmeübertrager nach Anspruch 7, **dadurch gekennzeichnet, dass** sich das Sammelrohr den Scheibenstapel annähernd senkrecht überdeckend ausdehnt und vorzugsweise gegenüberliegend zu den Öffnungen des Scheibenstapels eine Ausnehmung zum Austausch des zweiten Fluids, wie eines Kühlmittels, aufweist.

9. Wärmetauscher nach zumindest einem der Ansprüche 7 oder 8, **dadurch gekennzeichnet, dass** das Sammelrohr als Rohrsegment ausgebildet ist.

10. Wärmetauscher nach zumindest einem der Ansprüche 7 bis 9, **dadurch gekennzeichnet, dass** das Sammelrohr als Spannklammer den Scheibenstapel wenigstens teilweise umspannt.

11. Wärmetauscher nach einem der Ansprüche 1 bis 6, **dadurch gekennzeichnet, dass** der Kühlmittelsammelkanal als Kühlmittelkasten ausgebildet ist.

12. Wärmetauscher nach Anspruch 11, **dadurch gekennzeichnet, dass** jeder zweite Fluidkanal an den Kühlmittelkasten angeschlossen ist, wobei der Kühlmittelkasten einen äußeren Anschluss für ein Verbindungsmittel, insbesondere ein Rohr, zur Zuleitung des Kühlmittels in den Kühlmittelkasten oder zur Ableitung des Kühlmittels aus dem Kühlmittelkasten aufweist.

13. Wärmetauscher nach Anspruch 12, **dadurch gekennzeichnet, dass** der Kühlmittelkasten als einteiliger Diffusor ausgebildet ist.

14. Wärmetauscher nach einem der vorhergehenden Ansprüche, **dadurch gekennzeichnet, dass** der Kühlmittelsammelkanal als Flansch ausgebildet ist, der aus einem den Scheibenstapel zumindest teilweise umgreifenden Blech, oder Gussteil oder Kunststoffteil gebildet ist und eine Dichtfläche zur Verbindung mit dem Verbindungsmittel aufweist.

15. Wärmetauscher nach einem der vorhergehenden Ansprüche, **dadurch gekennzeichnet, dass** der Wärmetauscher zumindest teilweise aus einem austenitischen und/oder ferritischen Werkstoff gefertigt ist.

16. Wärmetauscher nach einem der vorhergehenden Ansprüche, **dadurch gekennzeichnet, dass** alle Bauteile des Wärmetauschers in einem einzigen Ofendurchlauf lötbar sind.

## Claims

1. A heat exchanger, particularly an exhaust gas cooler or charge air cooler, comprising a plate stack (2) consisting of a plurality of elongated plate pairs (32), wherein in each case two interconnected plates (18, 18') form a second fluid channel (4) between them and a first fluid channel (30) is formed between two plate pairs, wherein a first fluid channel (30) is surrounded by two second fluid channels (4), wherein each second fluid channel (4) is connected to at least one coolant collecting channel (11, 12), wherein the two interconnected plates (18, 18') of a plate pair (32) are soldered or welded on both sides at their rims (8) along their longitudinal extension and/or transverse extension, **characterised in that** at least one opening (9, 10) for connecting the second fluid channel (4) to the coolant collecting channel (11, 12) is formed in at least one of the formed rims (8).

2. The heat exchanger according to claim 1, **characterised in that** the interconnected two plates (18, 18') of a plate pair (32) form a U-shaped second fluid channel (4) or a Z-shaped second fluid channel between them.

3. The heat exchanger according to one of the preceding claims, **characterised in that** the first fluid channel (30) is enclosed on four sides by the second fluid channel.

4. The heat exchanger according to one of the preceding claims, **characterised in that** a rim (8), formed perpendicular on the bottom plate (18) and/or on the top plate (18'), is soldered to a base of the overlying bottom plate (18).

5. The heat exchanger according to at least one of the preceding claims, **characterised in that** one opening (9, 10) each is formed in the rim (8) of the plate (18) near an inlet (5) and an outlet (6) for the first fluid, wherein the inlet (5) and the outlet (6) for the first fluid are formed by the narrow sides (21) of the two interconnected plates (18, 18') and the openings (9, 10) of a plurality of interconnected plate pairs (32), arranged lying on top of one another, lie approximately one above the other.

6. The heat exchanger according to at least one of the preceding claims, **characterised in that** a rimless or rimmed cover plate (19) is provided for closing the topmost second fluid channel (4).

7. The heat exchanger according to one of the preceding claims, **characterised in that** the coolant collecting channel is formed as a header.

8. The heat exchanger according to claim 7, **characterised in that** the header extends covering the plate stack approximately perpendicularly and has a recess for exchanging the second fluid, such as a coolant, preferably opposite to the openings of the plate stack.

9. The heat exchanger according to at least one of claims 7 or 8, **characterised in that** the header is formed as a tube segment.

10. The heat exchanger according to at least one of claims 7 to 9, **characterised in that** the header encompasses the plate stack at least partially as a tensioning clamp.

11. The heat exchanger according to one of claims 1 to 6, **characterised in that** the coolant collecting channel is formed as a coolant tank.

12. The heat exchanger according to claim 11, **characterised in that** each second fluid channel is connected to the coolant tank, wherein the coolant tank has an outer connection for a connecting means, particularly a tube, for supplying the coolant to the coolant tank or for discharging the coolant from the coolant tank.

13. The heat exchanger according to claim 12, **characterised in that** the coolant tank is formed as a one-piece diffuser.

14. The heat exchanger according to one of the preceding claims, **characterised in that** the coolant collecting channel is shaped as a flange, which is formed from a metal sheet, at least partially encompassing the plate stack, or a cast part or a plastic part and has a sealing surface for connection to the connecting means.

15. The heat exchanger according to one of the preceding claims, **characterised in that** the heat exchanger is fabricated at least partially of an austenitic and/or ferritic material.

16. The heat exchanger according to one of the preceding claims, **characterised in that** all structural parts of the heat exchanger can be soldered in a single pass through the furnace.

## Revendications

1. Echangeur de chaleur, en particulier refroidisseur de gaz d'échappement ou refroidisseur d'air de suralimentation, comprenant une pile de plaques (2) se composant de plusieurs paires de plaques allongées (32), où deux plaques (18, 18') assemblées l'une à l'autre forment entre elles, à chaque fois, un deuxième canal de fluide (4), et un premier canal de fluide (30) est formé entre deux paires de plaques, où un premier canal de fluide (30) est entouré par deux deuxièmes canaux de fluide (4), où chaque deuxième canal de fluide (4) est raccordé à au moins un canal collecteur de liquide de refroidissement (11, 12), où les deux plaques (18, 18') d'une paire de plaques (32), assemblées l'une à l'autre, sont brasées ou soudées, des deux côtés, sur leurs bords (8) le long de leur étendue longitudinale et / ou de leur étendue transversale, **caractérisé en ce qu'**au moins une ouverture (9, 10) est configurée dans au moins l'un des bords formés (8), ladite ouverture servant à relier le deuxième canal de fluide (4), au canal collecteur de liquide de refroidissement (11, 12).

2. Echangeur de chaleur selon la revendication 1, **caractérisé en ce que** les deux plaques (18, 18') d'une paire de plaques (32), assemblées l'une à l'autre, forment entre elles un deuxième canal de fluide (4) en forme de u ou un deuxième canal de fluide en forme de z.

3. Echangeur de chaleur selon l'une des revendications précédentes, **caractérisé en ce que** le premier canal de fluide (30) est bordé des quatre côtés, par le deuxième canal de fluide.

4. Echangeur de chaleur selon l'une quelconque des revendications précédentes, **caractérisé en ce qu'**un bord (8) formé perpendiculairement par rapport à la plaque inférieure (18) et / ou à la plaque supérieure (18') est brasé avec un fond de la plaque inférieure (18) placée par-dessus.

5. Echangeur de chaleur selon au moins l'une quelconque des revendications précédentes, **caractérisé en ce que** chacune des ouvertures (9, 10) placées dans le bord (8) de la plaque (18) est configurée à proximité d'une entrée (5) et d'une sortie (6) du premier fluide, où l'entrée (5) et la sortie (6) du premier fluide sont formées par les petits côtés (21) des deux plaques (18, 18') assemblées l'une à l'autre, et les ouvertures (9, 10) de plusieurs paires de plaques (32) assemblées les unes aux autres, qui sont disposées en étant superposées, sont placées pratiquement les unes au-dessus des autres.

6. Echangeur de chaleur selon au moins l'une quelconque des revendications précédentes, **caractérisé en ce qu'**il est prévu, pour la fermeture du deuxième canal de fluide placé tout en haut (4), une plaque de recouvrement (19) sans bord ou bordée.

7. Echangeur de chaleur selon l'une quelconque des revendications précédentes, **caractérisé en ce que** le canal collecteur de liquide de refroidissement est conçu comme un tube collecteur.

8. Echangeur de chaleur selon la revendication 7, **caractérisé en ce que** le tube collecteur s'étend en recouvrant la pile de plaques, de façon presque verticale, et présente, de préférence à l'opposé des ouvertures de la pile de plaques, un évidement servant à l'échange du deuxième fluide, tel qu'un liquide de refroidissement.

9. Echangeur de chaleur selon au moins l'une des revendications 7 ou 8, **caractérisé en ce que** le tube collecteur est configuré comme un segment tubulaire.

10. Echangeur de chaleur selon au moins l'une quelconque des revendications 7 à 9, **caractérisé en ce que** le tube collecteur, comme une bride de serrage, couvre au moins partiellement la pile de plaques.

11. Echangeur de chaleur selon l'une quelconque des revendications 1 à 6, **caractérisé en ce que** le canal collecteur de liquide de refroidissement est conçu comme une boîte à eau.

12. Echangeur de chaleur selon la revendication 11, **caractérisé en ce que** chaque deuxième canal de fluide est raccordé à la boîte à eau, où la boîte à eau présente un raccordement extérieur pour un moyen de liaison, en particulier un tube, servant à l'arrivée du liquide de refroidissement dans la boîte à eau, ou bien servant à l'évacuation du liquide de refroidissement sortant de la boîte à eau.

13. Echangeur de chaleur selon la revendication 12, **caractérisé en ce que** la boîte à eau est conçue comme un diffuseur formant une seule et même pièce.

14. Echangeur de chaleur selon l'une quelconque des revendications précédentes, **caractérisé en ce que** le canal collecteur de liquide de refroidissement est conçu comme une bride qui est formée à partir d'une tôle ou d'une pièce moulée ou d'une pièce en matière plastique entourant au moins partiellement la pile de plaques, et présente une surface d'étanchéité servant à l'assemblage avec le moyen de liaison.

15. Echangeur de chaleur selon l'une quelconque des revendications précédentes, **caractérisé en ce que** l'échangeur de chaleur est fabriqué au moins partiellement dans un matériau austénitique et / ou ferritique.

16. Echangeur de chaleur selon l'une quelconque des revendications précédentes, **caractérisé en ce que** tous les composants de l'échangeur de chaleur peuvent être brasés au cours d'un unique passage au four.
